# EUROPÄISCHE PATENTANMELDUNG

(11) **EP 3 076 541 A1**
(43) Veröffentlichungstag der Anmeldung: **05.10.2016**
(21) Anmeldenummer: 15161970.7
(22) Anmeldetag: 31.03.2015
(51) Int. Cl.: H02P 21/14, G01M 1/10, G05B 13/02

(54) **ANTRIEBSVORRICHTUNG MIT TRÄGHEITSMOMENTSCHÄTZUNG**

(71) Anmelder: Siemens Aktiengesellschaft, 80333 München (DE)
(72) Erfinder: Bade, Jörn, 91096 Möhrendorf (DE); Nemeth-Csoka, Mihaly, 91056 Erlangen (DE); Neudeck, Michael, 91056 Erlangen (DE)

(57) **Zusammenfassung**

Die Erfindung betrifft ein Verfahren zum Betreiben einer Reglervorrichtung (2) für eine Regelung einer Antriebsvorrichtung (1), die ein Lastmoment (M) und ein Trägheitsmoment (J) aufweist. Während einer Konstantlaufphase, in welcher durch die Reglervorrichtung (2) eine Antriebgeschwindigkeit (12) der Antriebsvorrichtung (1) auf einem konstanten Sollwert (14) gehalten wird, wird durch einen Lastmomentschätzer (26) ein Lastschätzwert (25) des Lastmoments (M) ermittelt. In der Konstantlaufphase soll eine Trägheitsmomentvorsteuerung erfolgen. Hierzu wird ein Modell (23) der Antriebsvorrichtung (1) bereitgestellt, durch welches ein Zusammenhang zwischen dem Trägheitsmoment (J) und dem Lastmoment (M) beschrieben ist. Während der Konstantlaufphase wird ein Trägheitsschätzwert (24) des Trägheitsmoments (J) auf der Grundlage des Modells (23) bereitgestellt.

## Beschreibung

Die Erfindung betrifft ein Verfahren zum Betreiben eines Reglers oder einer Reglervorrichtung für eine Regelung einer Antriebsvorrichtung. Die Antriebsvorrichtung kann beispielsweise eine elektrische Maschine umfassen. Die Erfindung umfasst des Weiteren die Reglervorrichtung sowie die Antriebsvorrichtung.

Bei drehzahlgeregelten oder allgemein geschwindigkeitsgeregelten Antriebsvorrichtungen ist die Qualität des Regelkreises, also seine Regelgenauigkeit und sein dynamisches Verhalten, stark davon abhängig, wie genau die zu regelnde Strecke bekannt ist. Ein besonders wichtiger Parameter ist dabei das Trägheitsmoment der Regelstrecke, insbesondere der durch die Antriebsvorrichtung angetriebenen Last. Ändert sich das Trägheitsmoment betriebsbedingt und kann diese Eigenschaft nicht mitgeteilt werden, leidet die Güte der Regelung. Es kommt beim Einstellen oder Einregeln eines geänderten Geschwindigkeitswerts zu einem Überschwingen oder die Geschwindigkeitseinstellung ist langsamer als bei einem genauer geschätzten Trägheitsmoment.

Aus der EP 2 537 789 A2 ist ein Trägheitsmomentschätzer zum Schätzen eines Trägheitsmoment-Faktors einer Motoranordnung einer Aufzugsanlage bekannt. Ein Trägheitsschätzwert des Trägheitsmoments wird hierbei bei einer periodisch geänderten Antriebsgeschwindigkeit des Fahrzeugs gemessen. Mit anderen Worten ist ein dynamischer Vorgang nötig, um den Trägheitsschätzwert zu ermitteln. Ändert sich während einer Konstantlaufphase, in welcher die Reglervorrichtung eine Antriebsgeschwindigkeit der Antriebsvorrichtung auf einem konstanten Sollwert hält, so steht in einer daran anschließenden Beschleunigungsphase kein aktueller Trägheitsschätzwert zur Verfügung.

Ein weiterer Trägheitsmomentschätzer ist aus der DE 10 2011 085 551 A1 bekannt. Auch dieser Trägheitsmomentschätzer benötigt einen Drehzahländerungsvorgang, um das Trägheitsmoment zu schätzen.

Aus der DE 10 2006 062 591 A1 ist ein Lastmomentschätzer eines Lastmoments oder Lastenmoments einer Antriebsvorrichtung bekannt. Bei der bekannten Anordnung ist des Weiteren eine Drehmomentvorsteuerung vorgesehen, durch welche in Abhängigkeit von einem Trägheitsmoment der Antriebsvorrichtung und einem aktuellen Lastmoment ein Vorsteuerwert für eine Reglervorrichtung ermittelt wird.

Der Erfindung liegt die Aufgabe zugrunde, bei einer Antriebsvorrichtung das Trägheitsmoment zu schätzen.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Durch die Erfindung ist ein Verfahren bereitgestellt, das zum Betreiben einer Reglervorrichtung für eine Regelung einer Antriebsvorrichtung ausgelegt ist. Die Antriebsvorrichtung weist ein Lastmoment und ein Trägheitsmoment auf. Diese müssen beim Regeln einer Antriebsgeschwindigkeit der Antriebsvorrichtung berücksichtigt werden. Mit Antriebsgeschwindigkeit ist hier je nach Ausgestaltung der Antriebsvorrichtung z.B. eine Drehzahl oder eine Lineargeschwindigkeit gemeint. Bei dem Verfahren wird während einer Konstantlaufphase, in welcher die Reglervorrichtung die Antriebsgeschwindigkeit auf einem konstanten Sollwert hält, durch einen Lastmomentschätzer ein Lastschätzwert des Lastmoments ermittelt. Als Lastmomentschätzer kann ein an sich aus dem Stand der Technik bekannter Lastmomentschätzer verwendet werden, wie er beispielsweise eingangs beschrieben worden ist. Eine andere Möglichkeit der Lastmomentschätzung ist beispielsweise, die Antriebsleistung während der Konstantlaufphase zu ermitteln und in Abhängigkeit von der Antriebsgeschwindigkeit und der Antriebsleistung den Lastschätzwert zu ermitteln.

Erfindungsgemäß wird bei dem Verfahren ein Modell der Antriebsvorrichtung bereitgestellt. Durch das Modell wird ein Zusammenhang zwischen dem Trägheitsmoment und dem Lastmoment beschrieben. Während der Konstantlaufphase wird ein Trägheitsschätzwert des Trägheitsmoments auf der Grundlage des Modells bereitgestellt. Dies wird im Folgenden als Trägheitsmomentvorsteuerung bezeichnet. Das Trägheitsmoment kann man während einer Beschleunigung ausrechnen, das ist Stand der Technik. Was neu ist, ist die Vorberechnung des Trägheitsmoments ohne Beschleunigung. Das wird hier als Trägheitsmomentvorsteuerung bezeichnet.

Durch die Erfindung ergibt sich der Vorteil, dass während der Konstantlaufphase und insbesondere am Ende der Konstantlaufphase ein Trägheitsschätzwert bereitgestellt wird, der dazu genutzt werden kann, in einer anschließenden Beschleunigungsphase die Regelung der Antriebsgeschwindigkeit mit einer höheren Güte, das heißt Dynamik und Präzision, einzustellen, als es der Fall wäre, wenn nach der Konstantlaufphase zu Beginn der Beschleunigungsphase zunächst ein Trägheitsschätzwert mit einem aus dem Stand der Technik bekannten Trägheitsmomentschätzer ermittelt würde. Der Erfindung liegt die Erkenntnis zugrunde, dass es Antriebsvorrichtungen gibt, bei denen das Lastmoment signifikant von dem jeweiligen Trägheitsmoment abhängig ist. Ein Beispiel dafür ist ein Förderband, wie es beispielsweise in einem Flughafen zur Gepäckförderung genutzt wird. Je mehr Gepäck auf dem Förderband liegt, desto größer wird das Lastmoment, weil durch das Gewicht des Gepäcks die Reibung steigt. Zugleich bildet dasselbe Gepäck auch den größten Teil des Trägheitsmoments. In Abhängigkeit von einem Lastschätzwert des Lastmomen ts kann auf die Menge oder Masse des Gepäcks geschlossen werden. Daraus wiederum kann ein Trägheitsschätzwert des Trägheitsmoments ermittelt werden. Ein anderes Beispiel ist ein Transportsystem in einem Bergwerk, mit welchem Schutt oder Geröll transportiert wird. Bei einer Antriebsvorrichtung mit Förderband ist die Reibung von dem zu bewegenden Trägheitsmoment abhängig.

Zu der Erfindung gehören auch Weiterbildungen des Verfahrens, durch welche sich zusätzliche Vorteile ergeben.

Gemäß einer Weiterbildung wird mit dem Trägheitsschätzwert eine Drehmomentvorsteuerung der Reglervorrichtung parametriert oder eingestellt. Als Drehmomentvorsteuerung kann die eingangs beschriebene Vorsteuerung oder eine andere, aus dem Stand der Technik bekannte Vorsteuerung bereitgestellt sein. Durch die Weiterbildung ergibt sich der Vorteil, dass eine Dynamik der Reglervorrichtung verbessert wird, das heißt eine Zeitkonstante zum Einregeln eines vorgegebenen Sollwerts der Antriebsgeschwindigkeit wird verringert.

Gemäß einer Weiterbildung wird während einer Beschleunigungsphase, in welcher durch die Reglervorrichtung die Antriebsgeschwindigkeit auf einen neuen Sollwert eingeregelt wird, durch einen dynamischen Trägheitsmomentschätzer ein Trägheitswert des Trägheitsmoments ermittelt. Während der Beschleunigungsphase ändert sich also die Antriebsgeschwindigkeit. Daher kann ein an sich aus dem Stand der Technik bekannter Trägheitsmomentschätzer verwendet werden. Der Unterschied des Trägheitsmomentschätzers zum genannten Modell ist, dass der Trägheitsmomentschätzer aufgrund eines dynamischen Verhaltens der Antriebsvorrichtung den Trägheitswert des Trägheitsmoments ermittelt. Bei der Weiterbildung wird das Modell mittels des Trägheitswerts angepasst. Hierdurch ergibt sich der Vorteil, dass die Reglervorrichtung selbstkalibrierend oder selbstjustierend ist.

Gemäß einer Weiterbildung wird durch das Modell der Trägheitsschätzwert drehrichtungsabhängig erzeugt. Dies hat sich als besonders vorteilhafte Ausführungsform erwiesen. Sie beruht auf der Erkenntnis, dass der Zusammenhang zwischen Trägheitsmoment und Lastmoment drehrichtungsabhängig ist.

Gemäß einer Weiterbildung weist das Modell eine lineare Zuordnungsvorschrift mit einem Offsetparameter und einem Steigungswert auf. Die Zuordnungsvorschrift ist also mit anderen Worten durch eine Geradengleichung beschrieben, wobei der Offsetparameter einen Y-Achsen-Abschnitt und der Steigungswert die Geradensteigung darstellen oder beschreiben kann. Diese Ausführungsform des Modells weist den Vorteil auf, dass das Modell mit besonders geringem Aufwand an die Antriebsvorrichtung angepasst werden kann.

Eine Weiterbildung sieht vor, dass das Modell aus mehreren Wertpaaren während eines Betriebs der Antriebsvorrichtung gebildet wird. Jedes Wertpaar umfasst dabei einen gemessenen oder geschätzten Lastschätzwert des Lastmoments und einen gemessenen oder geschätzten Trägheitswert des Trägheitsmoments. Indem das Modell während des Betriebs auf der Grundlage von mehreren Wertpaaren angepasst wird, ergibt sich der Vorteil, dass auch eine Alterung oder eine andere strukturelle Veränderung der Antriebsvorrichtung durch das Modell berücksichtigt wird.

Gemäß einer Weiterbildung wird das Modell auf der Grundlage der Wertpaare iterativ aktualisiert. Hierdurch ergibt sich der Vorteil, dass schon auf der Grundlage weniger Wertpaare ein Modell bereitsteht. Hierdurch wird das Modell schon nach kurzer Zeit ab Beginn des Betriebs nutzbar.

Die Erfindung umfasst auch eine Reglervorrichtung für eine Regelung einer Antriebsvorrichtung, die in der beschriebenen Weise ein Trägheitsmoment und ein Lastmoment aufweist. Die Reglervorrichtung weist einen Signaleingang zum Empfangen eines Sollwerts und einen Steuerausgang zum Ausgeben eines Stellsignals zum Einstellen einer Antriebsgeschwindigkeit der Antriebsvorrichtung auf. Bei der erfindungsgemäßen Reglervorrichtung ist ein Modell der Antriebsvorrichtung bereitgestellt, durch welches ein Zusammenhang zwischen dem Trägheitsmoment und dem Lastmoment beschrieben ist. Die Reglervorrichtung ist dazu ausgelegt, eine Ausführungsform des erfindungsgemäßen Verfahrens durchzuführen. Die erfindungsgemäße Reglervorrichtung ist somit in der Lage, auch während einer Konstantlaufphase einen Trägheitsschätzwert des Trägheitsmoments bereitzustellen oder zu nutzen.

Die Erfindung umfasst des Weiteren eine Antriebsvorrichtung. Die Antriebsvorrichtung weist eine Antriebsmaschine auf. Die Antriebsmaschine ist insbesondere eine elektrische Maschine. Die Antriebsmaschine kann aber auch beispielsweise eine Verbrennungskraftmaschine oder eine hydraulische Maschine sein. Die erfindungsgemäße Antriebsvorrichtung weist eine Ausführungsform der erfindungsgemäßen Reglervorrichtung auf, wobei der Signalausgang der Reglervorrichtung mit einer Geschwindigkeitsstelleinrichtung der Antriebsmaschine gekoppelt ist. Bei einer elektrischen Maschine kann als Geschwindigkeitsstelleinrichtung beispielsweise ein Wechselrichter vorgesehen sein.

Gemäß einer Weiterbildung der Erfindung ist bei der Antriebsvorrichtung die Antriebsmaschine mit einem Fließband oder Förderband gekoppelt und dazu ausgelegt, das Fließband anzutreiben. Wie bereits ausgeführt, ist im Zusammenhang mit einem Fließband die Nutzung eines Modells zum Ermitteln des Trägheitsmoments in Abhängigkeit von einem Lastmoment während einer Konstantlaufphase besonders geeignet.

Im Folgenden ist ein Ausführungsbeispiel der Erfindung beschrieben. Hierzu zeigt:
- FIG 1: eine schematische Darstellung einer Ausführungsform der erfindungsgemäßen Antriebsvorrichtung,
- FIG 2: eine schematische Darstellung eines in der Antriebsvorrichtung von FIG 1 bereitgestellten Modells für eine erste Drehrichtung, und
- FIG 3: das Modell von FIG 2 für eine der ersten Drehrichtung entgegengesetzte zweite Drehrichtung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

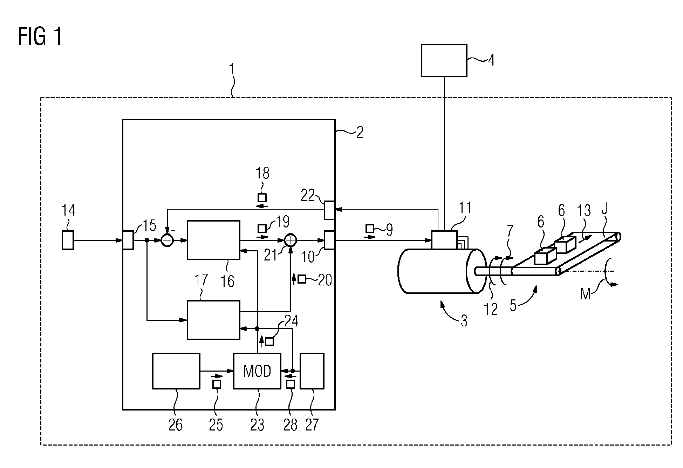

FIG 1 zeigt eine Antriebsvorrichtung 1 einer Reglervorrichtung 2, eine Antriebsmaschine 3, eine Energieversorgung 4 für die Antriebsmaschine 3 und eine durch die Antriebsmaschine 3 angetriebene Last 5. Die Steuervorrichtung 2 kann beispielsweise durch einen Mikrokontroller oder einen ASIC (application specific integrated circuit) bereitgestellt sein. Bei der Antriebsmaschine 3 kann es sich beispielsweise um eine elektrische Maschine handeln. Bei der Energieversorgung 4 kann es sich in diesem Fall beispielsweise um ein elektrisches Versorgungsnetzwerk für die Antriebsmaschine 3 handeln. Bei der Last 5 kann es sich beispielsweise um ein Fließband handeln, auf welchem eine wechselnde Anzahl und Größe von Transportstücken 6 transportiert wird. Zum Antreiben der Last 5 erzeugt die Antriebsmaschine 3 ein Antriebsmoment 7, durch welches die Last 5 bewegt wird. Dem Antriebsmoment 7 wirkt ein Lastmoment M der Last entgegen. Das Lastmoment M ist abhängig von der Anzahl der Transportstücke 6. Des Weiteren weist die Last 5 ein Trägheitsmoment J auf, das ebenfalls von der Anzahl und dem Gewicht der Transportstücke 6 abhängig ist.

Die Antriebsmaschine 3 erzeugt das Antriebsmoment 7 in Abhängigkeit von einem Stellsignal 9, das die Reglervorrichtung 2 an einem Steuerausgang 10 ausgibt. Der Steuerausgang 9 kann hierzu mit einer Geschwindigkeitsstelleinrichtung 11 der Antriebsmaschine 3 gekoppelt sein, an welche das Stellsignal 9 ausgegeben wird. Die Geschwindigkeitsstelleinrichtung 11 kann beispielsweise einen Wechselrichter 11 oder ein anderes Motorsteuergerät aufweisen. Mittels des Wechselrichters 11 kann elektrische Energie aus der Versorgungseinheit 4 in die Antriebsmaschine 3 eingespeist werden. In Abhängigkeit von dem erzeugten Antriebsmoment 7 und dem Lastmoment M ergibt sich eine Antriebsgeschwindigkeit 12 der Antriebsmaschine 3. Durch die Antriebsgeschwindigkeit 12 resultiert beispielsweise eine Fördergeschwindigkeit 13 eines Förderbands.

Die Reglervorrichtung 2 erzeugt das Stellsignal 9 in Abhängigkeit von einem Sollwert 14, den die Reglervorrichtung 2 an einem Signaleingang 15 empfängt. Der Signaleingang 15 und der Steuerausgang 10 können über einen Regler 16 und eine Drehmomentvorsteuerung 17 gekoppelt sein. Der Regler 16 kann in Abhängigkeit von dem Sollwert 14 und Messwerten 18 einen Regelwert 19 erzeugen. Beispielsweise kann der Regler 16 ein PI-Regler (PI - proportional-integral) oder ein PID-Regler (PID - proportional-integral-differenzial) sein. Die Drehmomentvorsteuerung 17 kann einen Vorsteuerwert 20 erzeugen. Ein Addierer 21 kann den Reglerwert 19 und Vorsteuerwert 20 zu dem Stellwert 9 kombinieren. Das resultierende Stellsignal 9 kann in diesem Fall das Antriebsmoment 7 vorgeben oder einstellen. Die Messwerte 18 können beispielsweise durch Sensoren der Antriebsmaschine 3 und/oder der Last 5 erzeugt werden. Die Messwerte 18 können durch die Reglervorrichtung 2 an einem Messwerteingang 22 empfangen werden.

Bei der Reglervorrichtung 2 kann die Drehmomentvorsteuerung 17 und/oder der Regler 16 während eines Betriebs der Antriebsvorrichtung 1 parametriert oder justiert oder angepasst werden. Hierzu weist die Steuervorrichtung 2 ein Modell 23 (MOD) auf. Das Modell 23 erzeugt Trägheitsschätzwerte 24 des Trägheitsmoments J der Last 5. Das Modell 23 erzeugt die Trägheitsschätzwerte 24 in Abhängigkeit von Lastschätzwerten 25 des Lastmoments M. Die Lastschätzwerte 25 werden bei der Reglervorrichtung 2 durch einen Lastmomentschätzer 26 erzeugt. Der Lastmomentschätzer 26 kann in an sich bekannter Weise ausgestaltet sein. Die Reglervorrichtung 2 kann des Weiteren einen Trägheitsmomentschätzer 27 aufweisen, der während einer Beschleunigungsphase der Antriebsvorrichtung 1 Trägheitswerte 28 des Trägheitsmoments J der Last 5 schätzt. Der Trägheitsmomentschätzer 27 kann in an sich bekannter Weise ausgestaltet sein. Mittels des Modells 23 werden die Trägheitsschätzwerte 24 insbesondere während einer Konstantlaufphase der Antriebsvorrichtung 1 erzeugt. Dies wird hier als Trägheitsmomentvorsteuerung bezeichnet.

Bei der Aktivierung der Trägheitsmomentvorsteuerung wird vorausgesetzt, dass an der Last 5 eine Abhängigkeit zwischen Lastmoment M und Trägheitsmoment J vorhanden ist. Als Beispiel ist ein Förderband am Flughafen zu nennen. Bei Be- oder Entladung des Förderbandes ist nicht zu erwarten, dass eine für eine zuverlässige Trägheitsmoment-Identifikation ausreichende Drehzahländerung vorhanden ist. Vielmehr ist zu erwarten, dass eine Phase mit etwa konstanter Drehzahl folgt, also eine Konstantlaufphase, wobei eine Lastidentifikation möglich ist. Ist die vorausgesetzte Abhängigkeit bekannt, kann das Trägheitsmoment J ohne Beschleunigungsphase ausgerechnet werden.

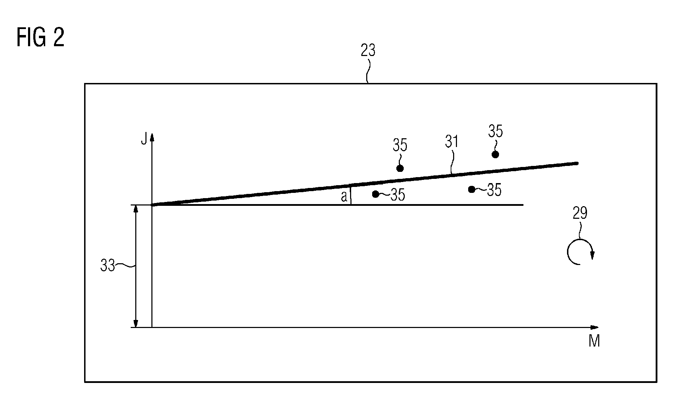

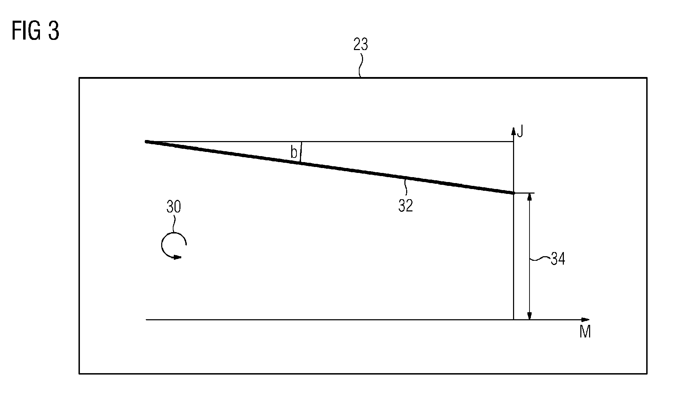

FIG 2 und FIG 3 veranschaulichen das Modell 23 noch einmal genauer. FIG 2 zeigt das Modell 23 für eine erste Antriebsrichtung 29 oder Drehrichtung der Antriebsmaschine 3, FIG 3 zeigt das Modell 23 für eine entgegengesetzte zweite Antriebsrichtung 30 oder Drehrichtung der Antriebsmaschine 3.

Das Modell kann für jede Antriebsrichtung 29, 30 jeweils eine lineare Zuordnungsvorschrift 31, 32 aufweisen. Die jeweilige Zuordnungsvorschrift 31, 32 kann durch einen Offsetwert 33, 34 und einen Steigungswert a, b definiert sein. Durch jede Zuordnungsvorschrift 31, 32 wird ein Zusammenhang zwischen dem Trägheitsmoment J und dem Lastmoment M beschrieben. Anhand von FIG 2 ist beispielhaft veranschaulicht, wie die Zuordnungsvorschrift 31 aus mehreren Wertepaaren 35 gebildet sein kann. Beispielsweise kann die Zuordnungsvorschrift 31 mittels der Methode der kleinsten Quadrate als Regressionsgerade oder Regressionskurve aus den Wertepaaren 35 gebildet sein. Es kann auch vorgesehen sein, die Zuordnungsvorschrift 31, 32 iterativ an neu ermittelte Wertepaare anzupassen. Es können beispielsweise aus den Wertpaaren mittels einer rekursiven Mittelung Steigungswert a, b und der Offset 33, 34 ermittelt werden.

Durch die Reglervorrichtung 2 wird also in einem ersten Schritt bei konstanter Drehzahl das aktuelle Lastmoment M ermittelt, welches dann in einem zweiten Schritt während einer Drehzahländerung dazu genutzt wird, das Trägheitsmoment J als Trägheitswert 28 zu ermitteln. So entsteht ein Wertpaar 35. Das so ermittelte Trägheitsmoment J wird zur Verbesserung des Regelkreises der Reglervorrichtung 2 herangezogen.

Des Weiteren werden die ermittelten Trägheitsmomente J in die Trägheitsmoment-/Lastmomentkennlinie aufgenommen, das heißt die Zuordnungsvorschrift 31, 32. Diese Kennlinie wird dann während der Fahrt mit konstanter Drehzahl zur verbesserten Abschätzung des Trägheitsmoments J genutzt. Somit können sowohl konstante Drehzahlen als auch Drehzahlrampen zur Abschätzung des aktuellen Trägheitsmoments J beitragen.

Aus dem gerechneten Lastmoment M kann im statischen Zustand (konstante Drehzahl) das Trägheitsmoment J vorgesteuert werden, und bei einer folgenden Drehzahlrampe ist der Drehzahlregler dadurch in der Lage, die Drehzahl verbessert zu regeln.

Die Funktion "Trägheitsmoment-Lastmoment", das heißt die Zuordnungsvorschriften 31, 32, kann nicht nur statisch vorgegeben sein, sondern auch im laufenden Betrieb identifiziert und ständig aktualisiert werden. Dazu werden während der Beschleunigungsphasen, also während einer Vergrößerung oder Verkleinerung der Antriebsgeschwindigkeit, die identifizierten Wertepaare 35 (aktuelle Last und berechnetes Trägheitsmoment 28, wie es der Trägheitsmomentschätzer 27 erzeugt) zur Aktualisierung der Kennlinie benutzt.

Insgesamt zeigt das Beispiel, wie durch die Erfindung eine Online-Trägheitsmomentvorsteuerung mit Lasterfassung bereitgestellt werden kann.

## Patentansprüche

1. Verfahren zum Betreiben einer Reglervorrichtung (2) für eine Regelung einer Antriebsvorrichtung (1), die ein Lastmoment (M) und ein Trägheitsmoment (J) aufweist, wobei während einer Konstantlaufphase, in welcher durch die Reglervorrichtung (2) eine Antriebgeschwindigkeit (12) der Antriebsvorrichtung (1) auf einem konstanten Sollwert (14) gehalten wird, durch einen Lastmomentschätzer (26) ein Lastschätzwert (25) des Lastmoments (M) ermittelt wird, **dadurch gekennzeichnet, dass** ein Modell (23) der Antriebsvorrichtung (1) bereitgestellt wird, durch welches ein Zusammenhang zwischen dem Trägheitsmoment (J) und dem Lastmoment (M) beschrieben ist, und während der Konstantlaufphase ein Trägheitsschätzwert (24) des Trägheitsmoments (J) auf der Grundlage des Modells (23) als eine Trägheitsmomentvorsteuerung bereitgestellt wird.

2. Verfahren nach Anspruch 1,
wobei mit dem Trägheitsschätzwert (24) eine Drehmomentvorsteuerung (17) der Reglervorrichtung (2) parametriert wird.

3. Verfahren nach einem der vorhergehenden Ansprüche,
wobei während einer Beschleunigungsphase, in welcher durch die Reglervorrichtung (2) die Antriebgeschwindigkeit (12) auf einen neuen Sollwert (14) eingeregelt wird, durch einen Trägheitsmomentschätzer (27) ein Trägheitswert (28) des Trägheitsmoments (J) ermittelt wird und das Modell (23) mittels des Trägheitswerts (28) angepasst wird.

4. Verfahren nach einem der vorhergehenden Ansprüche,
wobei durch das Modell (23) der Trägheitsschätzwert (24) drehrichtungsabhängig erzeugt wird.

5. Verfahren nach einem der vorhergehenden Ansprüche,
wobei das Modell (23) eine lineare Zuordnungsvorschrift (31, 32) mit einem Offsetparameter (33, 34) und einem Steigungswert (a, b) aufweist.

6. Verfahren nach einem der vorhergehenden Ansprüche,
wobei das Modell (23) auf der Grundlage von mehreren Wertepaaren (35) von jeweils einem gemessenen oder geschätzten Lastschätzwert (25) des Lastmoments (M) und einem gemessenen oder geschätzten Trägheitswerts (28) des Trägheitsmoments (J) während eines Betriebs der Antriebsvorrichtung (1) angepasst wird.

7. Verfahren nach Anspruch 6,
wobei das Modell (23) auf der Grundlage der Wertpaare (35) iterativ aktualisiert wird.

8. Reglervorrichtung (2) für eine Regelung einer ein Trägheitsmoment (J) und ein Lastmoment (M) aufweisenden Antriebsvorrichtung (1), aufweisend:
- einen Signaleingang (15) zum Empfangen eines Sollwerts (14),
- einen Steuerausgang (10) zum Ausgeben eines Stellsignals (9) zum Einstellen einer Antriebsgeschwindigkeit (12) der Antriebsvorrichtung (1), **dadurch gekennzeichnet, dass** ein Modell (23) der Antriebsvorrichtung (1) bereitgestellt ist, durch welches ein Zusammenhang zwischen dem Trägheitsmoment (J) und dem Lastmoment (M) beschrieben ist, wobei die Reglervorrichtung (2) dazu ausgelegt ist, ein Verfahren nach einem der vorhergehenden Ansprüche durchzuführen.

9. Antriebsvorrichtung (1) mit einer Antriebsmaschine (3), insbesondere eine elektrische Maschine, und einer Reglervorrichtung (2) nach Anspruch 8,
wobei der Signalausgang (10) der Reglervorrichtung (2) mit einer Geschwindigkeitsstelleinrichtung (11) der Antriebsmaschine (3) gekoppelt ist.

10. Antriebsvorrichtung (1) nach Anspruch 9,
wobei die Antriebsmaschine (3) mit einem Fließband (5) gekoppelt ist und dazu ausgelegt ist, das Fließband (5) anzutreiben.
